# EUROPEAN PATENT APPLICATION

(11) **EP 2 881 624 A1**
(43) Date of publication of application: **10.06.2015**
(21) Application number: 13825550.0
(22) Date of filing: 01.07.2013
(51) Int. Cl.: F16H 57/04

(54) **COOLING TUBING FOR WINDING**

(30) Priority: 30.07.2012 JP 2012168306
(71) Applicant: Mitsubishi Heavy Industries, Ltd., Tokyo 108-8215 (JP)
(72) Inventor: SAKAI Kenji, Tokyo 108-8215 (JP)
(74) Representative: Bongiovanni, Simone
(86) International application number: PCT/JP2013/068015
(87) International publication number: WO 2014/021041

(57) **Abstract**

The present invention has a cooling tubing (8) that is wound around an outer surface (9S) of an object (9) to be cooled and cools the object (9) to be cooled by means of a cooling medium passed therethrough. The cooling tubing (8) is an angular tubing of which the cross-sectional shape is an angular tubular shape.

## Description

### Technical Field

The present invention relates to a cooling tubing for winding that is wound around an outer surface of an object to be cooled, such as a reduction gear (hereinafter simply referred to as a reduction gear), which is provided in a machine tool or the like (hereinafter simply referred to as a machine tool) and cools the reduction gear through a cooling medium within the tubing. Priority is claimed on Japanese Patent Application No. 2012-168306, filed July 30, 2012, the content of which is incorporated herein by reference.

### Background Art

In the related art, in machine tools, the reduction gear is often cooled by winding a tubing for allowing cooling water (cooling medium) to pass therethrough around the reduction gear in order to reduce a bad influence on a mechanism portion of a machine tool caused by heat generation of a reduction gear.

When the reduction gear is used under unfavorable conditions, such as a heavy load, further improvement in cooling efficiency according to the improvement of a tubing winding mechanism and an improvement in winding working efficiency are desired. In addition, as a related technique, there is a technique disclosed in the following PTL 1.

### Citation List

### Patent Literature

[PTL 1] Japanese Unexamined Patent Application Publication No. 2002-295649

### Summary of Invention

### Technical Problem

In the related art, in the reduction gear provided in the machine tool, a tubing made of a copper pipe or a resinous hose of which the cross-sectional shape is a circular tubular shape, is wound around the reduction gear or the like. By passing the cooling water through this tubing, the reduction gear is cooled so that abnormal heat generation is prevented.

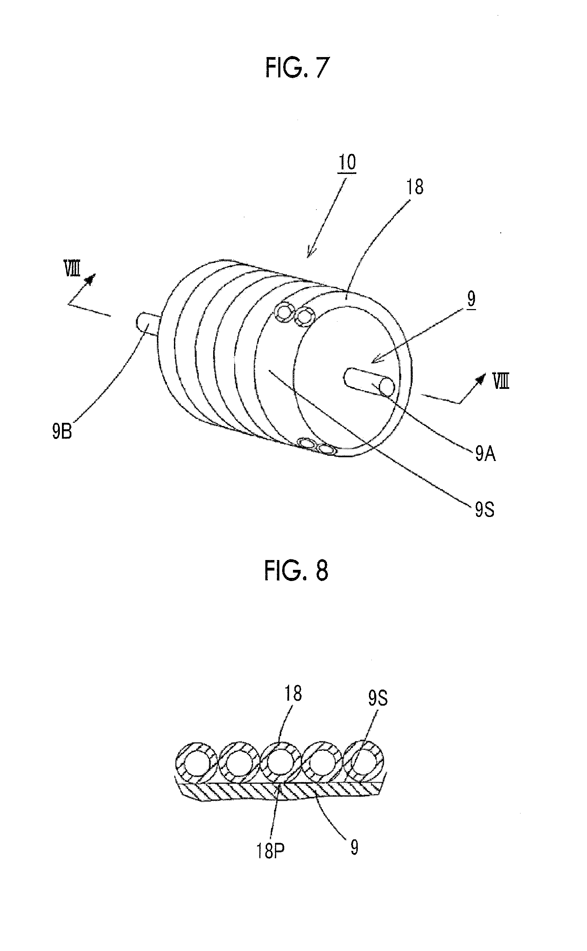

A related-art cooling tubing for winding will be described with reference to Figs. 7 and 8.

Fig. 7 is a cutaway perspective view of essential parts of the related-art cooling tubing for winding.

Fig. 8 is a cross-sectional view taken along line VIII-VIII of Fig. 7, illustrating only key points.

As illustrated in Figs. 7 and 8, a related-art cooling tubing for winding 10 has a cooling tubing 18 made of a copper pipe of which the cross-sectional shape is a circular tubular shape. The cooling tubing 18 is wound in parallel around an outer surface 9S of a reduction gear (object to be cooled) 9 having an input shaft 9A and an output shaft 9B, and is fixed to a fixing portion (not illustrated). Cooling water (cooling medium) from a cooling water supply device (not illustrated) is passed through the cooling tubing 18. The reduction gear 9 is cooled by the passing of the cooling water through the cooling tubing 18.

The operation of the related-art cooling tubing for winding 10 will be described. By passing the cooling water through the cooling tubing 18 at a proper flow rate, the reduction gear 9 is cooled by heat transfer via a contact portion 18P between an outer surface of the cooling tubing 18 and the outer surface 9S of the reduction gear 9.

Since the cross-sectional shape of the cooling tubing 18 is a circular tubular shape in the technique of such a related-art cooling tubing for winding 10, the contact portion 18P is close to line contact and the heat transfer area is small. Therefore, the cooling efficiency is not so high.

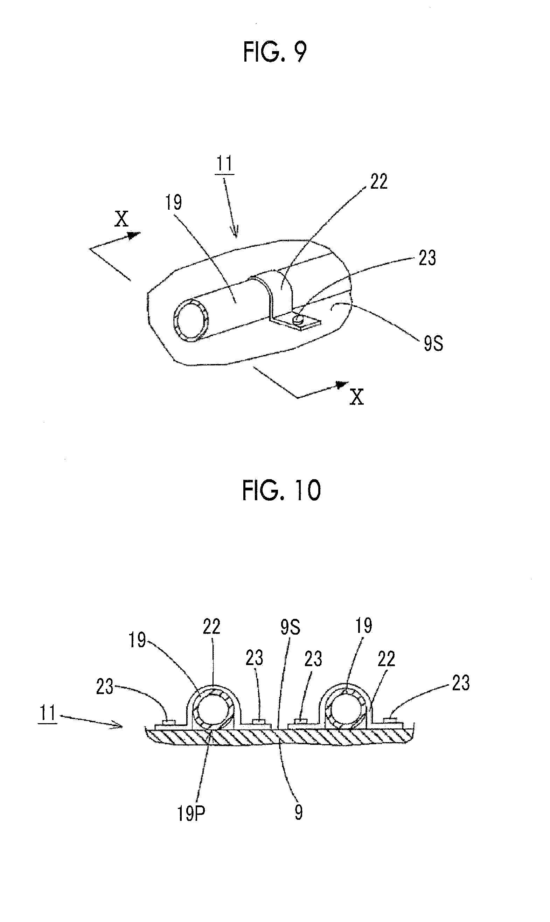

Additionally, another form of the related-art cooling tubing for winding will be described with reference to Figs. 9 and 10.

Fig. 9 is a cutaway cross-sectional view of essential parts of the other related-art cooling tubing for winding.

Fig. 10 is a cross-sectional view taken along line X-X of Fig. 9, illustrating only key points.

In Figs. 9 and 10, those having the same structure as those of the related-art cooling tubing for winding 10 described earlier will be designated by the same reference numerals, and illustration and description of duplicate parts will be omitted.

As illustrated in Figs. 9 and 10, a related-art cooling tubing for winding 11 has a cooling tubing 19 made of a copper pipe of which the cross-sectional shape is a circular tubular shape. The cooling tubing 19 is wound at proper intervals around the outer surface 9S of the reduction gear. The cooling tubing 19 is attached to the outer surface 9S of the reduction gear with tubing stoppers 22 and fastening parts 23.

The operation of the related-art cooling tubing for winding 11 will be described. By passing the cooling water through the cooling tubing 19 at a proper flow rate, the reduction gear 9 is cooled by heat transfer via a contact portion 19P between an outer surface of the cooling tubing 19 and the outer surface 9S of the reduction gear 9. Since the cooling tubing 19 is attached to the outer surface 9S of the reduction gear with the tubing stoppers 22 and the fastening parts 23, the cooling tubing will not come off due to the vibration or the like of the reduction gear.

In the technique of such a related-art cooling tubing for winding 11, the cooling tubing 19 is attached to the reduction gear with the tubing stoppers 22 and the fastening parts 23. Therefore, there is a concern that tapping work or the like for the fastening parts 23 is required, and substantial time, that is, substantial cost is required for the attachment of the tubing stoppers 22, the cooling tubing 19 cannot be wound in parallel in a substantially close contact state, and arrangement efficiency is lowered and the cooling efficiency of the reduction gear 9 is low.

An object of the invention is to provide a cooling tubing for winding that can improve cooling efficiency in view of the above-described situation.

### Solution to Problem

In the invention of the present application, the object is achieved by the following first to fifth aspects.
(1) A cooling tubing for winding as a first aspect includes a cooling tubing that is wound around an outer surface of an object to be cooled and cools the object to be cooled by means of a cooling medium passed therethrough. The cooling tubing is an angular tubing of which a cross-sectional shape is an angular tubular shape, and increases the area of heat transfer with the object to be cooled.
   In the first aspect, the area of heat transfer with the object to be cooled can be increased, and the cooling efficiency can be improved.
(2) In the cooling tubing for winding as a second aspect based on the first aspect, the angular tubing may be a tubing formed by deforming a tubing of which a cross-sectional shape is a circular tubular shape into an angular tubular shape.
   In the second aspect, the cooling efficiency can be improved, and the angular tubing can be inexpensively obtained by using a highly-versatile and inexpensive circular tubular tubing.
(3) In the cooling tubing for winding as a third aspect based on the second aspect, the angular tubing may be a tubing formed by winding a tubing of which the cross-sectional shape is a circular tubular shape around the outer surface of the object to be cooled, and then applying an external force to an outer surface of the tubing to crush and plastically deform the tubing into an angular tubular shape.
   In the third aspect, the cooling efficiency can be improved, and the angular tubing can be inexpensively obtained by using a highly-versatile and inexpensive circular tubular tubing. Moreover, in the third aspect, the formation work of the angular tubing and the adaptation work to the shape of the outer surface of the object to be cooled can be easily performed.
(4) In the cooling tubing for winding as a fourth aspect based on the first aspect, the angular tubing may be a tubing in which stepped portions are formed in mutually facing surfaces among four outer surfaces of the tubing of which the cross-sectional shape is a quadrangular tubular shape, and the angular tubing may be wound substantially in parallel around the outer surface of the object to be cooled such that the outer surfaces in which the stepped portions are not formed face the outer surface of the object to be cooled and the stepped portions face and overlap the stepped portions of the adjacent angular tubing.
   In the fourth aspect, similar to the above aspects, the cooling efficiency can be improved. Moreover, in the fourth aspect, the attachment to the outer surface of the object to be cooled is easy, and the working efficiency of winding to the outer surface of the object to be cooled can be enhanced. Additionally, in the fourth aspect, the stepped portions may also serve as a fixing function for the winding to the outer surface of the object to be cooled. Therefore, the number of the tubing stoppers as in the related art can be markedly reduced.
(5) In the cooling tubing for winding as a fifth aspect based on the fourth aspect, one stepped portion of the overlapping facing stepped portions may have a convex plugging portion and the other stepped portion may have a concave plugged portion. The convex plugging portion may be fitted to the concave plugged portion.
   In the fifth aspect, the same effects as those of the fourth aspect can be obtained, the fixation of the winding to the outer surface of the object to be cooled can be reliably performed, and the tubing stoppers as in the related art can be eliminated.

### Advantageous Effects of Invention

According to the aspects related to the invention, the cooling efficiency can be improved.

### Brief Description of Drawings

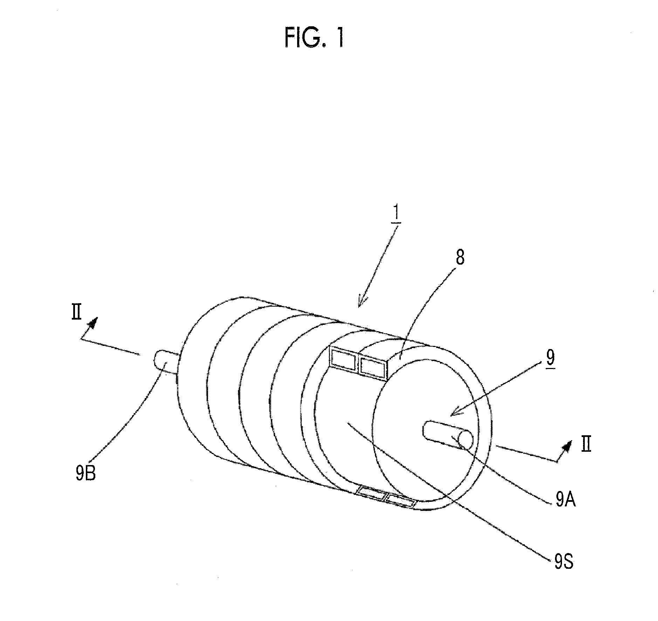

Fig. 1 is a cutaway perspective view of essential parts of a cooling tubing for winding related to a first embodiment of the invention.

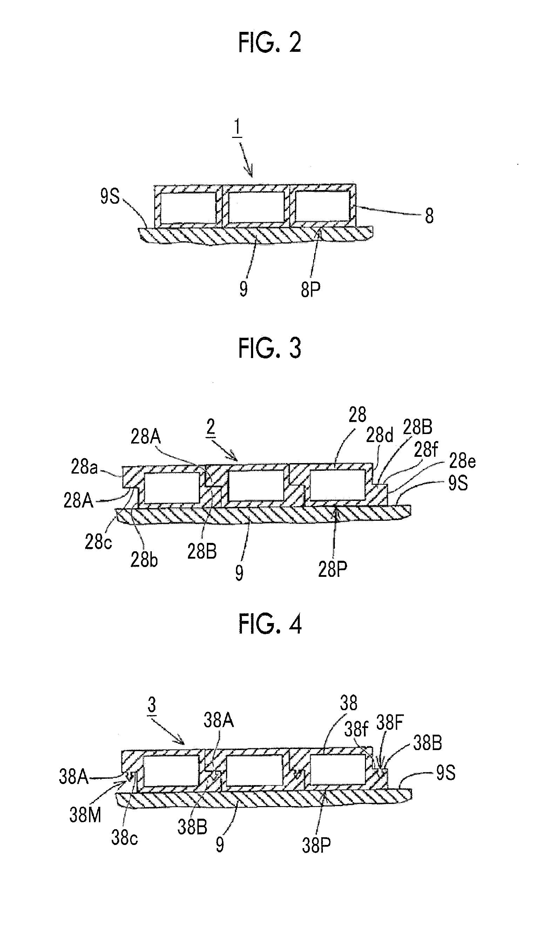

Fig. 2 is a cross-sectional view taken along line II-II of Fig. 1, illustrating only key points.
Fig. 3 is a cross-sectional view equivalent to Fig. 2, illustrating a cooling tubing for winding related to a second embodiment of the invention.
Fig. 4 is a cross-sectional view equivalent to Fig. 3, illustrating a cooling tubing for winding related to a third embodiment of the invention.

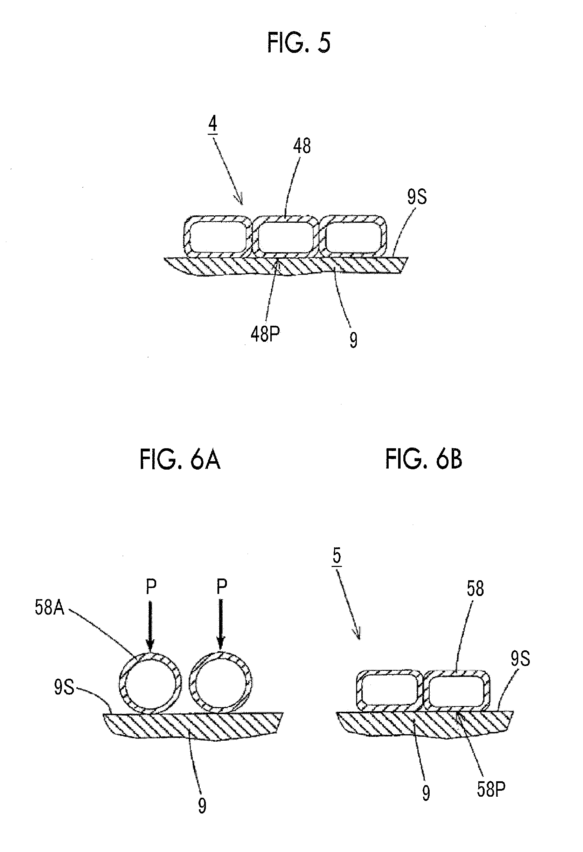

Fig. 5 is a cross-sectional view equivalent to Fig. 2, illustrating a cooling tubing for winding related to a fourth embodiment of the invention.
Fig. 6 is a cross-sectional view equivalent to Fig. 2, illustrating a cooling tubing for winding related to a fifth embodiment of the invention.
Fig. 7 is a cutaway cross-sectional view of essential parts of a related-art cooling tubing for winding.
Fig. 8 is a cross-sectional view taken along line VIII-VIII of Fig. 7, illustrating only key points.
Fig. 9 is a cutaway cross-sectional view of essential parts of another related-art cooling tubing for winding.
Fig. 10 is a cross-sectional view taken along line X-X of Fig. 9, illustrating only key points.

### Description of Embodiments

Hereinafter, embodiments of the invention will be described in detail with reference to the drawings. In addition, the invention is not limited by the embodiments. Additionally, constituent elements in the following embodiments include elements capable of being easily assumed by a person skilled in the art, or almost the same elements.

### (First Embodiment of Invention)

A first embodiment of the invention will be described with reference to Figs. 1 and 2.

Fig. 1 is a cutaway perspective view of essential parts of a cooling tubing for winding related to a first embodiment of the invention.

Fig. 2 is a cross-sectional view taken along line II-II of Fig. 1, illustrating only key points.

In Figs. 1 and 2, those having the same structure as those of a related-art cooling tubing for winding 10 described earlier will be designated by the same reference numerals, and duplicate description will be omitted.

A cooling tubing for winding 1 has cooling tubing 8 of which the cross-sectional shape is a quadrangular tubular shape. The cooling tubing 8 is wound in parallel around an outer surface 9S of a reduction gear (object to be cooled) 9, and is fixed to a fixing portion (not illustrated). Cooling water, which is a cooling medium from a cooling water supply device (not illustrated) is passed through the cooling tubing 8. The reduction gear 9 is cooled by the passing of the cooling water through the cooling tubing 8.

The cooling tubing 8 is formed of a pipe of a material having excellent heat transfer capability, such as copper or aluminum, and is a drawn material drawn using a drawing mold.

In addition, the material of the cooling tubing 8 is not limited to the drawn material of copper or aluminum. The cooling tubing 8, for example, may be a plastic pipe or the like in which a rubber hose or metal powder is mixed or may be a material according to the concept of the invention, and the detailed description thereof will be omitted.

Next, the operation of the cooling tubing for winding 1 will be described. By passing the cooling water through the cooling tubing 8 at a proper flow rate, the reduction gear 9 is cooled by heat transfer via a contact portion 8P between an outer surface of the cooling tubing 8 and the outer surface 9S of the reduction gear 9.

In the present embodiment, the cross-sectional shape of the cooling tubing 8 is an angular tubular shape. For this reason, in the present embodiment, the contact portion 8P comes into surface contact with the outer surface 9S of the reduction gear 9 over a wide range, and a heat transfer area increases. Hence, in the present embodiment, cooling efficiency can be enhanced more than when a tubing of which the cross-sectional shape is a circular tubular shape is used.

In addition, the width of the contact portion 8P is appropriately selected depending on the relationship between the cooling efficiency and the winding working efficiency of the cooling tubing 8 or the like.

### (Second Embodiment)

Next, a second embodiment of the invention will be described with reference to Fig. 3.

Fig. 3 is a cross-sectional view equivalent to Fig. 2, illustrating the cooling tubing for winding related to the second embodiment of the invention.

In Fig. 3, those having the same structure as those of the first embodiment described earlier will be designated by the same reference numerals, and duplicate description will be omitted.

A cooling tubing for winding 2 has cooling tubing 28. The cooling tubing 28 is a tubing in which stepped portions 28A and 28B are formed in mutually facing outer surfaces among four outer surfaces of the tubing of which the cross-sectional shape is a quadrangular shape, and no stepped portion is formed in the remaining outer surfaces. The stepped portions 28A and 28B are formed by first surfaces 28a and 28d and second surfaces 28b and 28e substantially perpendicular to the outer surfaces in which the stepped portions are not formed, and stepped surfaces 28c and 28f substantially perpendicular to the first surfaces 28a and 28d and the second surfaces 28b and 28e. The first surfaces 28a and 28d are connected to the edge of one outer surface of the pair of outer surfaces in which the stepped portions are not formed, and the second surfaces 28b and 28e are connected to the edge of the other outer surface of the pair of outer surfaces. The second surfaces 28b and 28e are formed at positions shifted with respect to the first surfaces 28a and 28d in directions in which the outer surfaces in which the stepped portions are not formed widen. The stepped surfaces 28c and 28f are surfaces that connect the edges of the first surfaces 28a and 28d and the edges of the second surfaces 28b and 28e. The spacing between the first surface 28a of the stepped portion 28A and the first surface 28d of the stepped portion 28B and the spacing between the second surface 28b of the stepped portion 28A and the second surface 28e of the stepped portion 28B are almost the same. For this reason, when the first surface 28a of the stepped portion 28A is located on an outward side of the tubing with respect to the second surface 28b of the stepped portion 28A, the first surface 28d of the stepped portion 28B is located on an inward side of the tubing with respect to the second surface 28e of the stepped portion 28B. The cooling tubing 28 is wound in parallel around the outer surface 9S so that the outer surfaces in which the stepped portions 28A and 28B are not formed face the outer surface 9S of the reduction gear 9. In this case, the stepped surface 28c of the stepped portion 28A faces and overlaps the stepped surface 28f of the stepped portion 28B in the cooling tubing 28 in the adjacent row. The cooling water from the cooling water supply device (not illustrated) is passed through the cooling tubing 28. The reduction gear 9 is cooled by the passing of the cooling water through the cooling tubing 28.

The cooling tubing 28 is formed of a pipe of a material having excellent heat transfer capability, such as copper or aluminum, and is a drawn material drawn using a drawing mold.

In addition, the material of the cooling tubing 28 is not limited to the drawn material of copper or aluminum. The cooling tubing 28, for example, may be a plastic pipe or the like in which a rubber hose or metal powder is mixed or may be a material according to the concept of the invention, and the detailed description thereof will be omitted.

Next, the operation of the cooling tubing for winding 2 will be described. By passing the cooling water through the cooling tubing 28 at a proper flow rate, the reduction gear 9 is cooled by heat transfer via a contact portion 28P between the cooling tubing 28 and the outer surface 9S of the reduction gear 9, like the aforementioned first embodiment.

In the present embodiment, the stepped portion 28A of the cooling tubing 28 overlaps the stepped portion 28B of the cooling tubing 28 in the adjacent row in the direction along the outer surface 9S of the reduction gear 9, and the cooling tubing 28 is wound around the outer surface 9S of the reduction gear 9. For this reason, in the present embodiment, the attachment of the reduction gear 9 to the outer surface 9S is easy, and the working efficiency of winding to an outer surface of an object to be cooled is excellent. Additionally, in the present embodiment, the stepped portions 28A and 28B also serve as a fixing function for the winding to the outer surface of the object to be cooled. Therefore, the number of the tubing stoppers as in the related art can be markedly reduced.

In addition, in the above, the inner cross-sectional shape of the cooling tubing 28 is a quadrangular shape. However, the inner cross-sectional shape of the cooling tubing 28 may not be a quadrangular shape or may be a shape similar to an outer cross-sectional shape. It is needless to say that the inner cross-sectional shape of the cooling tubing may be selected in consideration of the cooling efficiency obtained by the cooling water passing through the cooling tubing, the productivity of the material by the drawing mold, or the like.

### (Third Embodiment)

Next, a third embodiment of the invention will be described with reference to Fig. 4.

Fig. 4 is a cross-sectional view equivalent to Fig. 3, illustrating the cooling tubing for winding related to the third embodiment of the invention.

In Fig. 4, those having the same structure as those of the second embodiment described earlier will be designated by the same reference numerals, and duplicate description will be omitted.

A cooling tubing for winding 3 has cooling tubing 38. The cooling tubing 38, similar to the cooling tubing 28 in the second embodiment, is a tubing in which stepped portions 38A and 38B are formed in mutually facing outer surfaces among four outer surfaces of the tubing of which the cross-sectional shape is a quadrangular shape, and no stepped portion is formed in the remaining outer surfaces. Moreover, a convex plugging portion 38M is formed on a stepped surface 38c of the stepped portion 38A of one outer surface in the cooling tubing 38. Additionally, a concave plugged portion 38F is formed in a stepped surface 38f of the stepped portion 38B of the other outer surface. The cooling tubing 38 is wound in parallel around the outer surface 9S of the reduction gear 9 so that the outer surfaces in which the stepped portions 38A and 38B are not formed face the outer surface 9S. In this case, the stepped portion 38A of the cooling tubing 38 is overlapped with the stepped portion 38B of the cooling tubing 38 in the adjacent row, and the plugging portion 38M of one stepped portion 38A of the overlapping stepped portions is fitted into the plugged portion 38F of the other stepped portion 38B. The cooling water from the cooling water supply device (not illustrated) is passed through the cooling tubing 38. The reduction gear 9 is cooled by the passing of the cooling water through the cooling tubing 38.

The cooling tubing 38 is formed of a pipe of a material having excellent heat transfer capability, such as copper or aluminum, and is a drawn material drawn using a drawing mold.

In addition, the material of the cooling tubing 38 is not limited to the drawn material of copper or aluminum. The cooling tubing 38, for example, may be a plastic pipe or the like in which a rubber hose or metal powder is mixed or may be a material according to the concept of the invention, the detailed description thereof will be omitted.

The shape dimensions of the convex plugging portion 38M and the concave plugged portion 38F are appropriately selected in consideration of the ease of plugging work and the degree of fixation by the plugging.

Next, the operation of the cooling tubing for winding 3 will be described. By passing the cooling water through the cooling tubing 38 at a proper flow rate, the reduction gear 9 is cooled by heat transfer via a contact portion 38P between the cooling tubing 38 and the outer surface 9S of the reduction gear 9, like the aforementioned first and second embodiments.

Even in the present embodiment, the cooling tubing 38 is also wound in parallel around the outer surface 9S of the reduction gear 9. In this case, in the present embodiment, the stepped portion 38A of the cooling tubing 38 is overlapped with the stepped portion 38B of the cooling tubing 38 in the adjacent row, and the plugging portion 38M of the stepped portion 38A is fitted into the plugged portion 38F of the other stepped portion 38B. For this reason, in the present embodiment, the attachment of the reduction gear 9 to the outer surface 9S is easy, and the working efficiency of winding to the outer surface 9S is excellent. Moreover, in the present embodiment, the fixation of the winding to the outer surface 9S of the reduction gear 9 can be reliably performed, and the tubing stoppers as in the related art can be eliminated.

### (Fourth Embodiment)

Next, a fourth embodiment of the invention will be described with reference to Fig. 5.

Fig. 5 is a cross-sectional view equivalent to Fig. 2, illustrating the cooling tubing for winding related to the fourth embodiment of the invention.

A cooling tubing for winding 4 has cooling tubing 48 of which the cross-sectional shape is a quadrangular tubular shape. The cooling tubing 48 is wound in parallel around the outer surface 9S of the reduction gear 9, and is fixed to the fixing portion (not illustrated). Cooling water, which is a cooling medium from the cooling water supply device (not illustrated) is passed through the cooling tubing 48. The reduction gear 9 is cooled by the passing of the cooling water through the cooling tubing 48.

The cooling tubing 48 is formed in an angular tubular shape by crushing tubing, of which the cross-sectional shape of a material having excellent heat transfer capability, such as copper or aluminum is a circular tubular shape, into an angular shape as illustrated. For this reason, all corners of the cooling tubing 48 are rounded.

Next, the operation of the cooling tubing for winding 4 will be described. By passing the cooling water through the cooling tubing 48 at a proper amount of flow rate, the reduction gear 9 is cooled by heat transfer via a contact portion 48P between an outer surface of the cooling tubing 48 and the outer surface 9S of the reduction gear 9.

In the present embodiment, the angular tubular cooling tubing 48 is obtained by using a highly-versatile and inexpensive circular tubular tubing. Therefore, the manufacturing cost of the cooling tubing for winding 4 can be kept down.

### (Fifth Embodiment)

Next, a fifth embodiment of the invention will be described with reference to Fig. 6.

Fig. 6 is a cross-sectional view equivalent to Fig. 2, illustrating the cooling tubing for winding related to the fifth embodiment of the invention.

Here, Fig. 6(a) illustrates a state where tubing 58A of which the cross-sectional shape is a circular tubular shape is wound at proper intervals around the outer surface 9S of the reduction gear 9, and Fig. 6(b) illustrates angular tubular tubing manufactured by applying the external force P to the outside of the circular tubular tubing from the state of Fig. 6(a) to crush the circular tubular tubing in an angular shape.

A cooling tubing for winding 5, as illustrated in Fig. 6(b), has cooling tubing 58 of which the cross-sectional shape is a quadrangular tubular shape. The cooling tubing 58, as illustrated in Fig. 6(a), is formed by winding the tubing 58A of which the cross-sectional shape is a circular tubular shape at proper intervals around the outer surface 9S of the reduction gear 9, and then applying an external force P from the outside to crush and plastically deform the tubing into a quadrangular tubular cross-sectional shape. For this reason, the corners of the quadrangular tubular cooling tubing 58 of the present embodiment are also rounded similar to the cooling tubing 48 of the fourth embodiment. The circular tubular tubing 58A is formed of, for example, a pipe made of material, such as copper or aluminum, which is easily subjected to bending or crushing working, that is, easily subjected to plastic working, and is excellent in heat transfer capability.

Next, the operation of the cooling tubing for winding 5 will be described. By passing the cooling water through the cooling tubing 58 at a proper flow rate, the reduction gear 9 is cooled by heat transfer via a contact portion 58P between an outer surface of the cooling tubing 58 and the outer surface 9S.

Even in the present embodiment, similar to the fourth embodiment, the angular tubular cooling tubing 58 is obtained by using a highly-versatile inexpensive circular tubular tubing. Therefore, the manufacturing cost of the cooling tubing for winding 5 can be kept down. Additionally, in the present embodiment, the tubing 58A of which the cross-sectional shape is a circular tubular shape is crushed in an angular tubular shape by the external force P after being wound around the outer surface 9S of the reduction gear 9 at proper intervals. Thus, the formation work of the angular tubing and the adaptation work to the shape of the outer surface 9S of the reduction gear 9 can be easily performed.

### Industrial Applicability

According to the aspects related to the invention, the cooling efficiency of an object to be cooled can be improved.

### Reference Signs List

1, 2, 3, 4, 5: COOLING TUBING FOR WINDING
8, 28, 38, 48, 58: COOLING TUBING
28A, 28B, 38A, 38B: STEPPED PORTION
38M: PLUGGING PORTION (PROVIDED ON STEPPED PORTION 38A)
38F: PLUGGED PORTION (PROVIDED IN STEPPED PORTION 38B)
9: REDUCTION GEAR

## Claims

1. A cooling tubing for winding comprising:
a cooling tubing that is wound around an outer surface of an object to be cooled and cools the object to be cooled by means of a cooling medium passed therethrough,
wherein the cooling tubing is an angular tubing of which a cross-sectional shape is an angular tubular shape, and increases the area of heat transfer with the object to be cooled.

2. The cooling tubing for winding according to Claim 1,
wherein the angular tubing is a tubing formed by deforming a tubing of which a cross-sectional shape is a circular tubular shape into an angular tubular shape.

3. The cooling tubing for winding according to Claim 2,
wherein the angular tubing is a tubing formed by winding a tubing of which the cross-sectional shape is a circular tubular shape around the outer surface of the object to be cooled, and then applying an external force to an outer surface of the tubing to crush and plastically deform the tubing into an angular tubular shape.

4. The cooling tubing for winding according to Claim 1,
wherein the angular tubing is a tubing in which stepped portions are formed in mutually facing surfaces among four outer surfaces of the tubing of which the cross-sectional shape is a quadrangular tubular shape, and
wherein the angular tubing is wound substantially in parallel around the outer surface of the object to be cooled such that the outer surfaces in which the stepped portions are not formed face the outer surface of the object to be cooled and the stepped portions face and overlap the stepped portions of the adjacent angular tubing.

5. The cooling tubing for winding according to Claim 4,
wherein one stepped portion of the overlapping facing stepped portions has a convex plugging portion and the other stepped portion has a concave plugged portion, and
wherein the convex plugging portion is fitted to the concave plugged portion.

## Amended claims

### Amended claims under Art. 19.1 PCT

**1.** (Amended)
A speed reducer comprising:
a reduction gear; and
a cooling tubing that is wound around an outer surface of the reduction gear and cools the reduction gear by means of a cooling medium passed therethrough,
wherein the cooling tubing is an angular tubing of which a cross-sectional shape is an angular tubular shape.

**2.** (Amended)
The speed reducer according to Claim 1,
wherein the angular tubing is a tubing formed by deforming a tubing of which a cross-sectional shape is a circular tubular shape into an angular tubular shape.

**3.** (Amended)
The speed reducer according to Claim 2,
wherein the angular tubing is a tubing formed by winding a tubing of which the cross-sectional shape is a circular tubular shape around the outer surface of the reduction gear, and then applying an external force to an outer surface of the tubing to crush and plastically deform the tubing into an angular tubular shape.

**4.** (Amended)
The speed reducer according to Claim 1,
wherein the angular tubing is a tubing in which stepped portions are formed in mutually facing surfaces among four outer surfaces of the tubing of which the cross-sectional shape is a quadrangular tubular shape, and
wherein the angular tubing is wound substantially in parallel around the outer surface of the reduction gear such that the outer surfaces in which the stepped portions are not formed face the outer surface of the reduction gear and the stepped portions face and overlap the stepped portions of the adjacent angular tubing.

**5.** (Amended)
The speed reducer according to Claim 4,
wherein one stepped portion of the overlapping facing stepped portions has a convex plugging portion and the other stepped portion has a concave plugged portion, and
wherein the convex plugging portion is fitted to the concave plugged portion.

Statement under Art. 19.1 PCT

Clear Statement of Amended Places
   [Claim 1] to [Claim 5] of the claims are amended as shown in the attached sheet. That is, the "reduction gear" is added and amended in [Claim 1]. Moreover, the "object to be cooled" in [Claim 1] to [Claim 5] is amended as the "reduction gear", and the "cooling tubing for winding" is amended as the "speed reducer".
Base of Amendment
   The above amendment contents are based on the disclosure of Paragraphs [0001], [0002], [0023], [0029], [0033], [0035], [0038], and the like of the description at the time of filing.
